**Europäisches Patentamt**

**European Patent Office**

**Office européen des brevets**

(19)

(11) Veröffentlichungsnummer : **0 327 606 B1**

(12) **EUROPÄISCHE PATENTSCHRIFT**

(45) Veröffentlichungstag der Patentschrift :
**22.01.92 Patentblatt 92/04**

(21) Anmeldenummer : **88905174.4**

(22) Anmeldetag : **21.06.88**

(86) Internationale Anmeldenummer :
**PCT/CH88/00112**

(87) Internationale Veröffentlichungsnummer :
**WO 88/10211 29.12.88 Gazette 88/28**

(51) Int. Cl.⁵ : **B64G 1/10,** B64G 9/00

(54) **AUFBLASBARE FALTSTRUKTUR UND VERFAHREN ZUR HERSTELLUNG VON FALTSTRUKTUREN.**

(30) Priorität : **24.06.87 CH 2375/87**

(43) Veröffentlichungstag der Anmeldung :
**16.08.89 Patentblatt 89/33**

(45) Bekanntmachung des Hinweises auf die
Patenterteilung :
**22.01.92 Patentblatt 92/04**

(84) Benannte Vertragsstaaten :
**CH DE FR GB IT LI**

(56) Entgegenhaltungen :
**DE-A- 1 257 593**
**US-A- 3 282 533**
**US-A- 3 386 687**
**US-A- 3 405 886**
**US-A- 3 477 662**
**US-A- 4 166 598**

(73) Patentinhaber : **Oerlikon-Contraves AG**
**Schaffhauserstrasse 580**
**CH-8052 Zürich (CH)**

(72) Erfinder : **BERNASCONI, Marco, C.**
**Köschenrütistrasse 139**
**CH-8052 Zürich (CH)**
Erfinder : **KOTACKA, Karl**
**Eichacker 17**
**CH-8051 Zürich (CH)**

(74) Vertreter : **Hunziker, Kurt**
**c/o Werkzeugmaschinenfabrik**
**Oerlikon-Bührle AG Birchstrasse 155**
**CH-8050 Zürich (CH)**

EP 0 327 606 B1

## Beschreibung

Die Erfindung betrifft eine aufblasbare Faltstruktur für Schutz-oder andere Hilfsvorrichtungen gemäss dem Oberbegriff des Patentanspruchs 1 und ihre Verwendung als Schutzschilder und Schutzkammern zur Abschirmung von Nutzlasten im Weltraum.

Der Einsatz von empfindlichen technischen Geräten im Weltraum erfordert Schutzschilder oder Schutzhüllen, welche die entsprechenden Geräte vor kosmischer und elektromagnetischer Strahlung, Sonneneinwirkung, Meteoriten etc. schützen. Des weiteren werden Hilfsvorrichtungen benötigt, um für gewisse Nutzlasten definierte atmosphärische Bedingungen oder Umgebungstemperaturen aufrechtzuerhalten oder um Experimente oder einen bestimmten Arbeitsbereich gegenüber dem Weltall abzuschirmen. An solche Hilfs- oder Schutzvorrichtungen werden hohe Anforderungen gestellt, die durch deren spezifische Einsatzweise bedingt sind. So wird neben einer hohen Zuverlässigkeit beim Entfalten und im Betrieb ein geringes Gewicht und ein kleines Stauvolumen bei robuster Konstruktion sowie ein möglichst tiefer Preis gefordert. Daneben ist vor allem von Bedeutung, dass die Vorrichtung im Betriebszustand grosse Ausmasse, typischerweise 10 Meter oder mehr, erreichen kann.

Bekannte Vorrichtungen dieser Art können wegen ihrer Komplexität, ihren Abmessungen oder der zu hohen Kosten nicht für grössere Konstruktionen eingesetzt werden und weisen mithin strukturbedingte Grenzen auf. Dabei sind insbesondere mechanische, sich selbstöffnende Vorrichtungen bei grösseren Abmessungen nicht mehr einsetzbar. Herkömmliche Schutzschilder, wie sie im Zusammenhang mit Kryostaten verwendet werden, sind nicht entfaltbar und weisen kleine Dimensionen auf. Daneben sind ballonartig aufblasbare Kammern bekannt, die jedoch wegen ihrer Formgebung nur sehr beschränkte Einsatzmöglichkeiten zulassen, da im wesentlichen nur kugel- oder linsenförmige Formen möglich sind. Solche aufblasbare Vorrichtungen weisen zudem den grossen Nachteil auf, dass es kaum möglich ist, Öffnungen in der Oberfläche vorzusehen, die es erlauben würden, nachträglich noch Gegenstände in das Innere der Kammern zu bringen.

In der US-A-3,386,687 ist ein entfaltbares, flexibles Flugsegel beschrieben, das drei rohrförmige Träger aufweist, an denen ein zweiteiliges Segel befestigt ist. Die flexiblen Träger sind zusammen mit dem Segel leporelloartig gefaltet und können unter Einwirkung einer Druckquelle sequentiell aufgeblasen werden. Zu diesem Zweck sind sie mittels Koppelungselementen, die einen Gasaustausch zulassen, untereinander verbunden. Die Struktur ist in ihrer Geometrie aber nicht genau bestimmt. Die verhältnismässig schweren Koppelungselemente sind für viele Anwendungen nicht brauchbar und beanspruchen für komplexere Topologien im gefalteten Zustand zu viel Raum.

Verfahren zur Herstellung von Faltstrukturen durch das Aufblasen von Rohren aus mindestens einer Druckquelle sind bekannt, beispielsweise aus der DE-B-1257593. Diese Auslegeschrift beschreibt, wie ein Ausleger für Raumflugkörper, der auf dem Satellitenkörper aufgewickelt ist, im Raum durch Aufblasen der tragenden Rohre ausgestreckt und anschliessend durch Aushärten der Rohre stabilisiert wird. Das Verfahren ist jedoch nicht geeignet, Vorrichtungen komplizierterer Topologie und/oder grösserer Abmessungen zu entfalten und zu stabilisieren. Schutzhüllen oder Schutzkammern lassen sich damit nicht herstellen.

Es ist Aufgabe der Erfindung, eine faltbare Tragstruktur bzw. Faltstruktur als Schutzvorrichtungen für die Verwendung im Weltall zu schaffen, mit der auch grosse Nutzlasten teilweise abgeschirmt oder ganz umschlossen werden können, in ihrer Geometrie weitgehend beliebige, zwei- oder dreidimensionale Strukturen möglich sind und den Anforderungen bezüglich geringem Gewicht, kleinem Packvolumen, grosser Zuverlässigkeit, Robustheit und geringem Preis optimal Rechnung getragen wird.

Diese Aufgabe wird durch die im kennzeichnenden Teil des Patentanspruchs 1 genannten Merkmale gelöst.

Die erfindungsgemässe Faltstruktur besteht aus einer topologischen Anordnung von flexiblen, miteinander verbundenen, aufblasbaren Rohren. An diesen Rohren sind Membranen befestigt, welche im entfalteten Zustand die eigentlichen Schutzwände bilden. Da sowohl die Rohre als auch die Membranen aus Kunststoff gefertigt sind, weist diese Faltstruktur ein verhältnismässig geringes Gewicht auf. Zudem besteht der Vorteil einer einfachen Fertigung, einer beliebigen Länge der Rohre und eines kleinen Stauvolumens.

Das Verfahren zur Herstellung einer fertigen Schutzvorrichtung verwendet eine solche Faltstruktur, wobei durch Inflation der Rohre die Struktur entfaltet wird und die gewünschte skelettartige, beispielsweise dreidimensionale Form annimmt. Durch ein gezieltes Strecken der Rohre werden auch die Membranen gespannt und das Zusammenwirken der Membranen und der Rohre, die im aufgeblasenen Zustand als Streben wirken, führt zu einer stabilen zweioder dreidimensionalen Struktur. Auf diese Weise wird ein zuverlässiges Entfalten im Weltraum gewährleistet. Durch die Verwendung von Thermoplasten und einer chemisch aushärtbaren Beschichtung der Rohre, oder auch der Membranen, kann die Vorrichtung dauerhaft in der aufgeblasenen Form fixiert werden, ohne dass im Innern der Rohre der Gasdruck aufrechterhalten bleiben müsste.

Anhand der nachfolgenden Figuren sind die erfindungsgemässe Faltstruktur und verschiedene Ausführungsbeispiele näher erläutert.

Fig. 1a zeigt ein Skelett für einen sphärenförmigen Hitzesthild gemäss Fig. 1b

Fig. 1b zeigt einen sphärenförmigen Hitzeschild mit einer reflektierenden Kunststoffolie

Fig. 2a zeigt einen Hitzeschild mit einer prismenähnlithen Struktur

Fig. 2b zeigt die Grundfläche des Hitzeschildes gemäss Figur 2a

Fig. 3 zeigt einen prismenförmigen Hitzeschild

Fig. 4 zeigt eine Kammer in der Form eines Ikosaeders

Fig. 5 zeigt ein ringförmiges Besthattungs-Schild mit zwei Membranen

Fig. 6 zeigt eine Verbindungsstelle zwischen drei Rohrstreben

Fig. 7 zeigt ein Schnittmuster für eine Verbindungsstelle in welcher vier Rohrstreben zusammentreffen

Die erfindungsgemässe Vorrichtung ergibt im aufgeblasenen Zustand zwei- oder dreidimensionalen Strukturen, die einen skelettartigen Aufbau aufweisen. Der Formgebung sind nur durch topologische Rahmenbedingungen der Faltstrukturen Grenzen gesetzt. Es ist möglich, Strukturen mit Gesamtabmessungen von zehn oder mehr Metern mit ausreichender Stabilität zu fertigen.

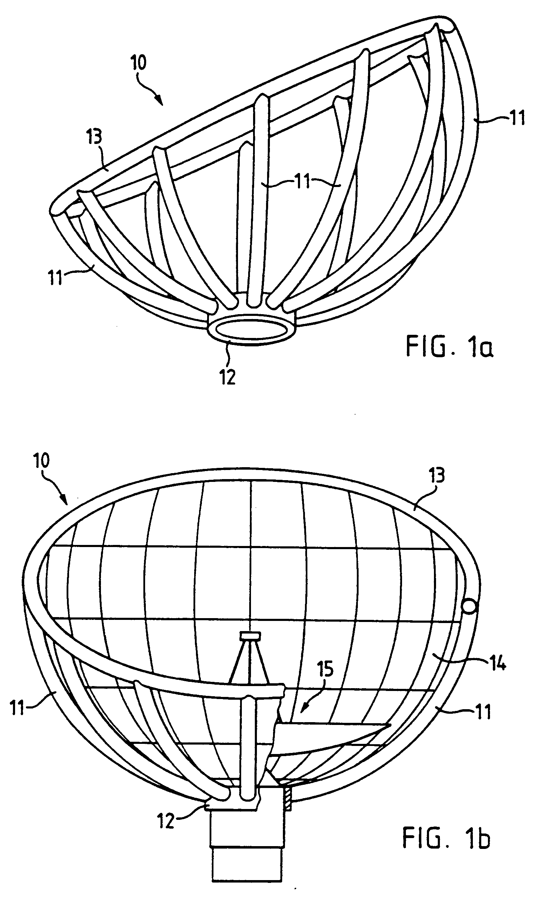

Das Skelett dieser Strukturen besteht aus einzelnen, flexiblen Rohren 11 (Fig. 1a, b), die durch Koppelungselemente 27 wie in Fig. 2b oder direkt wie in Figur 1a, b miteinander verbunden sind. Diese Koppelungselemente 27 sind so ausgebildet, dass zwischen dem Innern der einzelnen Rohre 22, 23 (Fig. 2b) ein Gasaustausch stattfinden kann. Wird derart durch diese Rohre 22, 23 ein geschlossenes System gebildet, so kann durch eine Druckquelle mit einem beliebigen Gas, beispielsweise Stickstoff, das ganze Skelett aufgeblasen werden. Unter Umständen ist es, insbesondere bei komplizierten Strukturen, wünschenswert, dass nicht alle Rohre gleichzeitig aufgeblasen werden, sondern dass eine sequentielle Inflation stattfindet. Zu diesem Zwecke können mehrere Quellen vorgesehen werden, die einzelne Bereiche des Skelettes getrennt aufblasen. Stattdessen kann ein sequentielles Aufblasen von verschiedenen Bereichen aber auch durch Ventile erreicht werden, welche erst bei einem bestimmten Gasdruck öffnen oder durch Membrane oder andere die Gasströmung beeinflussende Elemente, z.B. Verengungen im Rohrinnern. Diese Ventile oder Membrane zur Beeinflussung des Gasaustauschs können im Rohrinnern oder in einem Koppelungselement vorgesehen werden. Durch ein derartiges gestaffeltes Aufblasen können auch komplizierte Strukturen hergestellt werden,die mit einer sehr grossen Zuverlässigkeit entfaltet werden können.

Da die Inflation der Faltstruktur im Weltall erfolgt, genügen minime Drücke im Bereich von wenigen Millibar um ein Entfalten zu bewirken. Als Druckquellen kommen mittransportierte Druckflaschen oder durch chemische Reaktionen aus Feststoffen erzeugte Gase in Frage. Unter Umständen können die Faltstrukturen auch durch Einfüllen von Flüssigkeiten, welche auch gleichzeitig die Funktion der Aushärtung der Rohre bewirken können, entfaltet werden, sofern das Gesamtvolumen der Rohre nicht zu gross ist.

Da die Rohre 11 flexibel sein müssen und im entfalteten Zustand eine hohe Festigkeit aufweisen sollen, verwendet man beispielsweise faserverstärkten Verbundwerkstoff für deren Aussenwände. Vorteilhafterweise verwendet man für die Rohre ein Material mit einer möglichst geringen Biegesteifigkeit, so dass die Rohre auch entlang der Längsachsen gefaltet und so möglichst flach zusammengelegt werden können. Die Aussenwände der Rohre können so gefertigt sein, dass das Rohr im aufgeblasenen Zustand gekrümmt ist.

Zwischen den einzelnen Rohren 11 sind Membranen befestigt, welche im entfalteten Zustand die eigentlichen Schutzwände 14 (Fig. 1b) des Sthutzschildes 10 bilden. In der durch die Geometrie des aufgeblasenen Skeletts vorgegebenen Struktur sind diese Membranen flächenhaft gespannt.

Es ist auch möglich durch die Formgebung der Membranen eine bestimmte leichte Krümmung eines Rohres im aufgeblasenen Zustand zu erreichen. Wird z. B. ein (gerades) Rohr entlang einer Membran-Kante, die eine Krümmung aufweist, befestigt, so wird das Rohr nach der Inflation entlang dieser Kante mit der gleichen Krümmung verlaufen. Solchermassen kann die Struktur in ihrer Geometrie durch ein Zusammenwirken von Rohren und Membranen bestimmt werden.

Typischerweise liegen die Abmessungen solcher Schutzvorrichtungen im Bereith von 10 bis 15 Metern. Bei diesen Dimensionen werden Rohre mit Durchmessern von ca. 20 bis 50 cm verwendet. Für spezielle Anwendungen können selbstverständlich auch Elemente mit grösseren oder kleineren Massen eingesetzt werden. Die Wandstärke hängt vom gewünschten Innendruck ab und liegt im Bereich von ca. 1 Millimeter.

Selbstverständlich können auch starre Elemente, z.B. Befestigungsvorrichtungen oder Luken, in die Struktur integriert werden, sofern dies nicht durch ein vorgegebenes Packvolumen ausgeschlossen ist.

Die Faltstrukturen können insbesondere auch als Träger technischer und wissenschaftlicher Sensoren und Geräte oder als Segelflächen verwendet werden, wobei hier im wesentlichen zweidimensionale Anordnungen eingesetzt werden.

Üblicherweise soll die Struktur nach einmaligem Aufblasen am Einsatzort in seiner Form fixiert bleiben und nicht mehr zusammengelegt werden. Eine solche Fixation wird vorzugsweise dadurch erreicht, dass die Innenseiten der Rohre mit einem Laminat beschichtet sind, das erst in Verbindung mit einem Katalysatorgas aushärtet. Dieses Gas kann beim Aufblasen oder nachdem die Struktur bereits die Endform angenommen hat beigemischt werden. Es besteht somit keine Notwendigkeit, den Gasdruck im Innern der Rohre über längere Zeit aufrechtzuerhalten. Es ist auch möglich, die Struktur nach der Inflation beispielsweise mittels eines sich verfestigenden Füllstoffs, der in die Hohlräume der Rohre eingelassen wird, zu fixieren.

Eine weitere Möglichkeit der Fixation besteht darin, dass die Membrane und/oder die Rohre durch Sonneneinwirkung bzw. thermische Einwirkung oder durch Zugabe eines Härters eine chemische oder physikalische Härtung erfahren und die Struktur dadurch stabil bleibt. Sofern nur die Membranen ausgehärtet werden, haben die Rohre nur während der Inflation eine Stützwirkung und dienen danach nur noch der Verbindung der einzelnen, nun zu Platten versteiften Membranen. Eine Kombination von Fixierung der Rohre und Härtung der Membranen ist ebenfalls möglich.

In den Figuren 1a und 1b ist ein sphärenförmiges Wärmeschild dargestellt. Von einem festen Basisring 12 geht eine Vielzahl von Rippen 11 aus (Fig. 1a). Alle diese Rippen 11 münden in einen Ring 13. Sowohl der Ring 13 als auch diese Rippen 11 bestehen aus flexiblen Rohren und sind miteinander gasdicht verbunden, wobei die Rippen 11 direkt mit dem Ring 13 verklebt oder verschweisst sind. Die Rohre 11 sind so gefertigt, dass sie im aufgeblasenen Zustand eine Krümmung aufweisen und das Skelett so eine sphärische Form annimmt. Das Skelett wird über eine zentrale, nicht näher dargestellte Druckquelle aufgeblasen. An den Rippen 11 ist eine Kunststoffolie 14 befestigt, die nach dem Aufblasen des Skeletts gespannt ist (Fig. 1b). Diese Folie 14 weist beispielsweise eine reflektierende Beschichtung auf und schützt die Nutzlast 15 vor einer schädlichen Wärmeeinstrahlung. Als Folie 14 kann auch ein mehrschichtiges oder mehrphasiges flexibles Tuch bzw. eine Folie (z.B. MLI) verwendet werden.

Mit dem festen Basisring 12 kann das Thermoschutzschild an einem Trägerelement, an einem Raumfahrzeug oder auch an der Nutzlast selber befestigt werden. Die Druckquelle und falls erforderlich das Aktivierungsmedium oder Füllmaterial für die Fixierung der Rohre sind in der Nutzlast oder dem Raumfahrzeug vorgesehen und über Verbindungsleitungen mit dem Skelett verbunden (nicht dargestellt in Fig. 1). Im Weltraum wird die zusammengelegte Struktur entsprechend dem beschriebenen Verfahren entfaltet und fixiert.

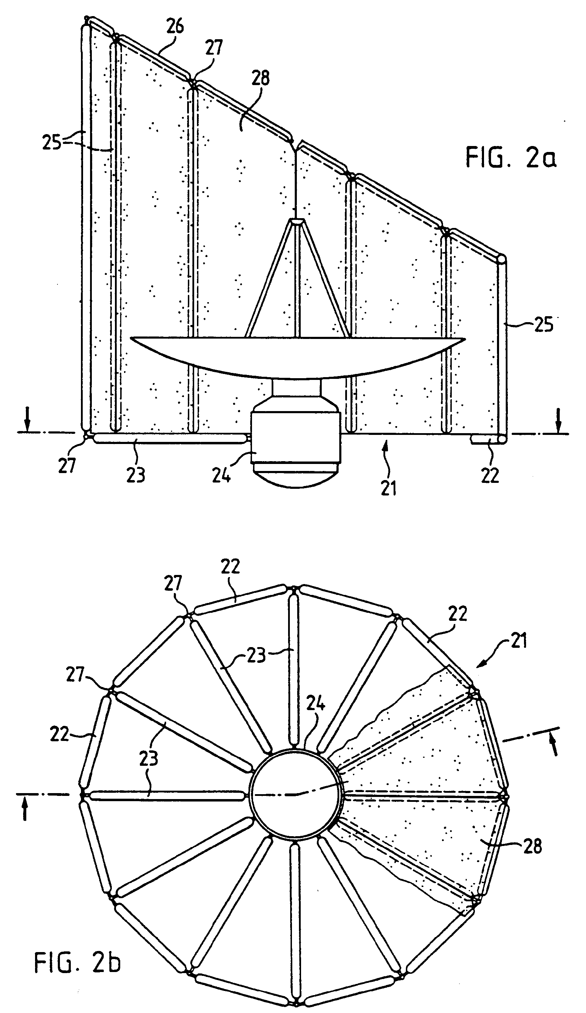

Die Figuren 2a und 2b zeigen eine prismenähnliche Faltstruktur im aufgeblasenen Zustand. Die Grundfläche 21 ist durch Rohrstreben 22 gebildet, welche die Kanten eines regelmässigen Zwölfecks bilden (Fig. 2b). In radialer Richtung sind zur Verstärkung weitere Streben 23 angebracht, die in einem Befestigungsring 24 zusammenlaufen. Der eigentliche Schutzmantel 28 wird durch Längsstreben 25 aufgespannt, wobei von jedem Eckpunkt der Grundfläche eine solche Strebe 25 ausgeht. Die andern Enden dieser Längsstreben 25 sind wiederum über Streben 26 gekoppelt, wobei diese in einer bezüglich der Längsachse geneigten Ebene liegen. Alle diese Streben 22, 23, 25, 26 bestehen aus flexiblen, aufblasbaren Rohren. Der Schutzmantel 28 kann aus einzelnen Abschnitten oder bei kleineren Strukturen auch aus einem Stück bestehen, die an den Längsstreben 25 und gegebenenfalls an den Ringstreben 22, 23 befestigt sind.

Um das Skelett mittels einer zentralen Druckquelle aufblasen zu können, werden die Koppelungselemente 27 zwischen den einzelnen Streben durch Rohrverbindungen gebildet. Diese können ebenfalls aus einem flexiblen Material bestehen oder aber auch starr sein, um beispielsweise den Winkel zwischen den Längsstreben 25 und der Grundfläche 21 zu definieren. Bei dem dargestellten Schutzschild sind deshalb starre Koppelungselemente 27 vorzuziehen, sofern man nicht zusätzliche Streben oder fixe Elemente vorsehen will um den rechten Winkel zwischen den Längsstreben 25 und der Grundfläche 21 zu erzielen.

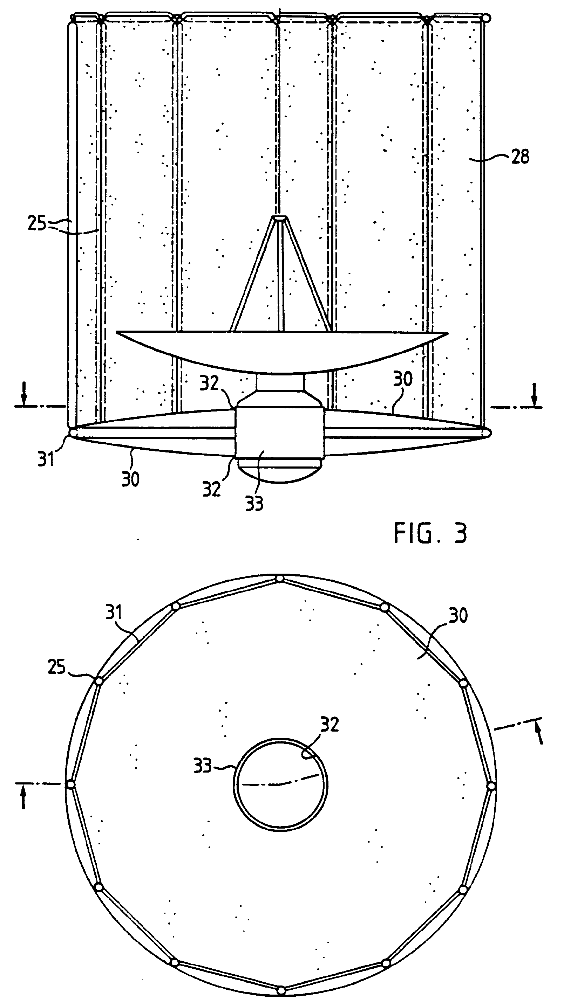

Fig. 3 zeigt ein dem soeben beschriebenen Wärmeschild sehr ähnliches Schild bei dem jedoch die Form der Grundfläche durch zwei entsprechend geformte Membranen 30 erreicht wird, an deren äusseren Kanten zu einem Ring geschlossene Streben 31 befestigt sind. Durch Inflation des Raumes zwischen den beiden Membranen 30 werden diese gespannt und führen ebenfalls zu einer zwölfeckigen Grundfläche. In den Ausnehmungen 32 der Membranen 30 ist ein Befestigungsring 33 vorgesehen. Durch ein Aufblasen und Fixieren der Streben 31 kann eine zusätzliche Spannkraft erzielt werden. Um die Stabilität der Grundfläche zu erhöhen, können zudem die Membraninnenflächen beispielsweise mit einem aushärtenden Laminat beschichtet sein.

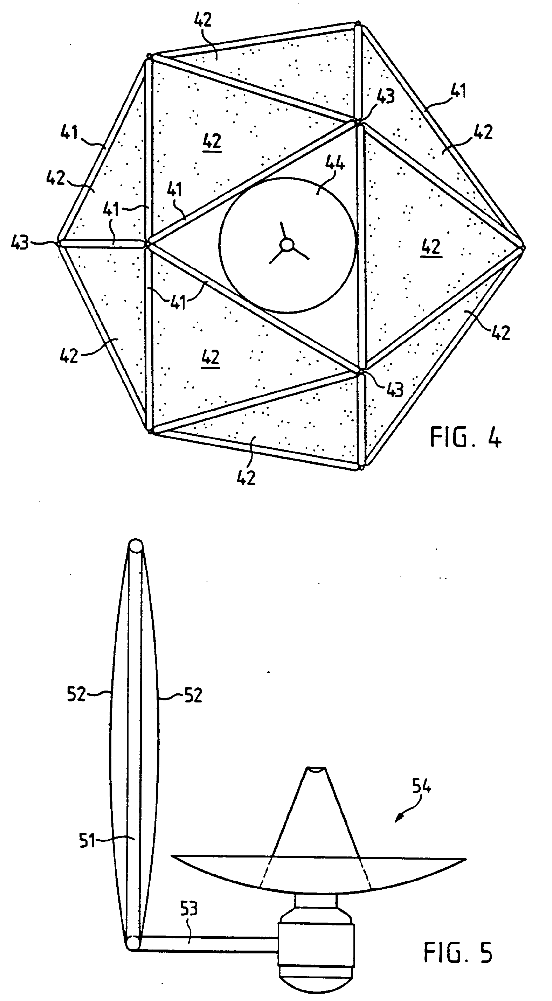

Ein weiteres Ausführungsbeispiel der Erfindung ist in Figur 4 dargestellt. Eine Abschirmung in Form eines Ikosaeders schliesst einen Raum ein in welchem definierte physikalische Bedingungen aufrechterhalten werden können, da dieser Raum gegenüber dem Weltall abgeschirmt werden kann. Die aufgeblasenen und fixierten Streben 41 halten die Struktur in dieser Form fest ohne dass im Innern des Körpers ein Ueberdruck bestehen müsste. Zwischen den Streben 41 sind dreieckförmige Kunststoffmembranen 42 gespannt. Da die ganze Struktur unabhängig vom Innendruck im Körper stabil ist, besteht auch die Möglichkeit, Luken vorzusehen, die geöffnet und geschlossen werden können, um beispielsweise Experimentiervorrichtungen in das Innere des Körpers zu bringen. Von jedem Eckpunkt des Ikosaeders gehen 5 Streben 41 weg, die untereinander über Koppelungsglieder 43 verbunden sind, um die Inflation mittels einer zentralen Druckquelle zu ermöglichen. Um die Befestigung an einem Raumfahrzeug zu ermöglichen, kann an einer Seitenfläche anstelle einer Kunststoffmembran eine Befestigungsvorrichtung 44 vorgesehen sein.

Figur 5 zeigt ein Beschattungsschild mit einer einfachen, im wesentlichen zweidimensionalen Struktur. Das Schild weist eine kreisrunde Form auf. Entlang der Peripherie zweier Membrane 52, verläuft ein ringförmiges Rohr 51. Anstelle von zwei Membranen 52 könnte selbstverständlich nur eine einzige Membran gespannt sein. Der Schild ist über einen starren Arm 53 mit dem Raumfahrzeug verbunden und schirmt die Nutzlast 54 gegenüber Sonneneinstrahlung ab.

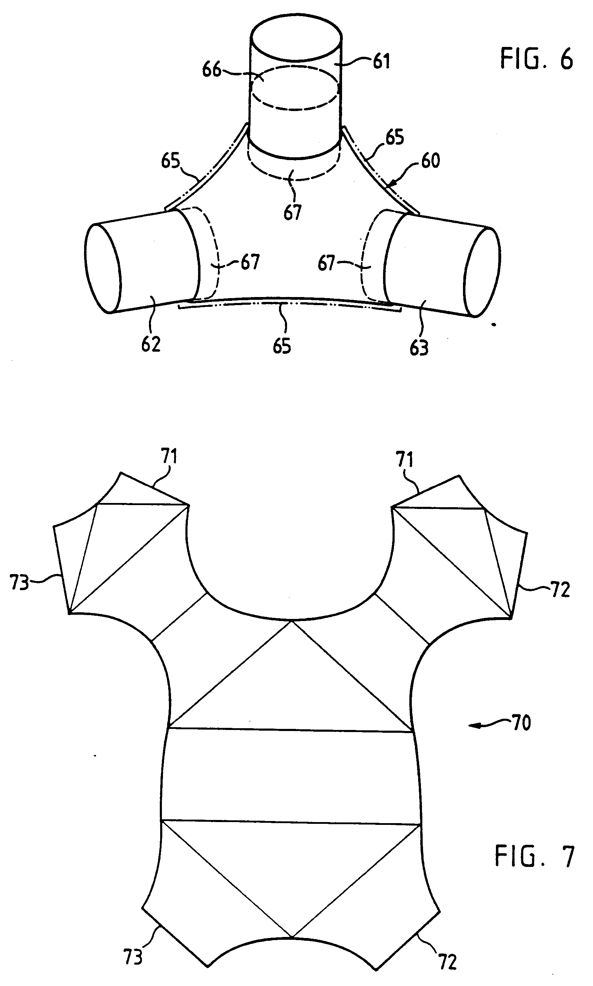

In Figur 6 ist eine Ausführungsform eines Koppelungsgliedes 60 dargestellt. Im dargestellten Beispiel werden drei rohrförmige, an ihren Enden offene Streben 61, 62, 63 miteinander verbunden. Dabei sind diese Streben an ihren offenen Stirnseiten 67 mit dem Koppelungsglied 60 verklebt oder verschweisst. Um die Stabilität dieser Übergangsstellen zu erhöhen, können an der Aussenseite Verstärkungsringe oder andere Verstärkungselemente 65 angebracht werden. Soll beispielsweise die Strebe 61 erst nach den beiden anderen Streben aufgeblasen werden, so ist es möglich, eine Membran oder ein entsprechendes Ventil 66 in dieser Strebe oder im Koppelungsglied 60 vorzusehen. Wird nun Gas aus einer Druckquelle über die Strebe 62 zugeführt, so werden zuerst diese und die Strebe 63 aufgeblasen und erst beim Erreichen eines bestimmten, durch die Membran oder das Ventil 66 definierbaren Gasdruckes findet auch eine Inflation der Strebe 61 statt.

Bei komplexen Faltstrukturen können, um die Zuverlässigkeit einer korrekten Entfaltung im Weltall zu steigern, auch gesteuerte Ventile verwendet werden, so dass die zeitliche Abfolge des Aufblasens verschiedener Teile der Faltstruktur genau festgelegt werden kann.

Figur 7 zeigt das Beispiel eines Schnittmusters zur Herstellung eines Übergangsstückes oder Koppelungsgliedes zur Verbindung von vier Rohrstreben. Da die Knotenpunkte zwischen den Rohren einer verhältnismässig grossen Belastung ausgesetzt sind, werden an deren Fertigung grosse Anforderungen gestellt. Deshalb erweist es sich als zweckmässig, möglichst wenige Kleb- oder Schweissstellen in den Knotenpunkten anzubringen. Die Herstellung des Übergangsstückes aus einem Stück eines flexiblen Materials, z.B. faserverstärktem Verbundwerkstoff, erfolgt nach topologischen Gesichtspunkten, indem die Abwicklung des dreidimensionalen Übergangsstückes bestimmt wird. Die sich entsprechenden geraden Kanten (71, 72, 73) des dargestellten Schnittmusters (70) werden je miteinander verbunden, so dass ein dreidimensionales Uebergangsstück mit vier kreisförmigen Oeffnungen entsteht, an welche je ein Rohr anschliesst.

Ausserdem ist es denkbar, dass sowohl die Rohre als auch die Übergangsstücke des Skelettes aus einem Stück gefertigt werden, um unnötige Kleb- oder Schweissstellen zu vermeiden.

Obwohl die Erfindung bisher im wesentlichen anhand von Schutzvorrichtungen erläutert wurde, kann die Faltstruktur insbesondere auch als Träger technischer und wissenschaftlicher Sensoren und Geräte oder als Segelfläche verwendet werden.

## Patentansprüche

1. Aufblasbare Faltstruktur mit einer Vielzahl von flexiblen, aufblasbaren, zu einem Skelett verbundenen Rohren (11, 13), wobei die Rohre (11, 13) zumindest teilweise an Knotenpunkten derart gasdicht miteinander verbunden sind, dass in ihrem Innern ein Gasaustausch stattfinden kann, dadurch gekennzeichnet, dass am Skelett zwischen den Rohren (11, 13) Membranen (14) aufgespannt sind, und dass Koppelungsglieder (60) von Rohren (11, 13; 61, 62, 63) in Knotenpunkten aus einem zusammenhängenden, biegbaren Lappen aus gasdichtem Werkstoff gefertigt sind, der nach dem Schnittmuster (70) der Abwicklung des dreidimensionalen Kopplungsglieds (60) geformt ist, und dessen Kanten gasdicht miteinander bzw. mit den Rohrenden (67) verbunden sind.

2. Aufblasbare Faltstruktur gemäss Anspruch 1, dadurch gekennzeichnet, dass die flexiblen Rohre (11, 13) und/oder die Kunststofflappen der Koppelungsglieder (60) aus einem faserverstärkten Verbundwerkstoff bestehen.

3. Aufblasbare Faltstruktur gemäss Anspruch 1 oder 2, dadurch gekennzeichnet, dass mindestens ein Teil der flexiblen Rohre (11, 13) im aufgeblasenen Zustand eine Krümmung aufweist.

4. Aufblasbare Faltstruktur gemäss Anspruch 1, dadurch gekennzeichnet, dass in den Rohren (11, 13; 61, 62, 63) und/oder Koppelungsgliedern (60) Ventile oder dünne Membranen (66) angebracht sind.

5. Aufblasbare Faltstruktur gemäss einem der Ansprüche 1 bis 4, dadurch gekennzeichnet, dass die zwischen den Rohren (11, 13) aufgespannten Membranen (14) durch einen Härtungsprozess fixiert werden und damit zur Stabilisierung der Struktur beitragen können.

6. Aufblasbare Faltstruktur gemäss Anspruch 5, dadurch gekennzeichnet, dass deren Form im aufgeblasenen Zustand durch ein Zusammenwirken von Rohren (11, 13) und Membranen (14) erzielt wird, indem die Rohre (11, 13) sich entlang den Befestigungsstellen mit den Membranen (14) ausrichten oder biegen.

7. Verwendung einer aufblasbaren Faltstruktur gemäss einem der Ansprüche 1 bis 6 für Schutzschilder oder Schutzkammern für Nutzlasten im Weltraum.

8. Verwendung einer aufblasbaren Faltstruktur gemäss einem der Ansprüche 1 bis 6 als Träger für Nutzlasten oder als Segelfläche.

## Claims

1. Inflatable folding structure having a plurality of flexible, inflatable tubes (11, 13) joined to form a frame, the tubes (11, 13) being at least partially joined together in a gas-tight manner at junction points in such a way that a gas exchange can take place inside them, characterised in that diaphragms (14) are stretched on the frame between the tubes (11, 13), and in that coupling members (60) of tubes (11, 13; 61, 62, 63) at junction points are made from a continuous flexible flap of gas-tight material which is shaped according to the cutting pattern (70) of the development of the three-dimensional coupling member (60), and whose edges are joined together or to the tube ends (67) in a gas-tight manner.

2. Inflatable folding structure according to claim 1, characterised in that the flexible tubes (11, 13) and/or the plastic flaps of the coupling members (60) are made of a fibre-reinforced composite material.

3. Inflatable folding structure according to claim 1 or 2, characterised in that at least one part of the flexible tubes (11, 13) has a curve in the inflated state.

4. Inflatable folding structure according to claim 1, characterised in that valves or thin diaphragms (66) are fitted in the tubes (11, 13; 61, 62, 63) and/or coupling members (60).

5. Inflatable folding structure according to one of claims 1 to 4, characterised in that the diaphragms (14) stretched between the tubes (11, 13) are fixed by a hardening process and hence can contribute to the stabilisation of the structure.

6. Inflatable folding structure according to claim 5, characterised in that its shape in the inflated state is achieved by a cooperation of tubes (11, 13) and diaphragms (14), the tubes (11, 13) aligning themselves or bending along the points of securing to the diaphragms (14).

7. Use of an inflatable folding structure according to one of claims 1 to 6, for protective shields or protective chambers for payloads in space.

8. Use of an inflatable folding structure according to one of claims 1 to 6, as a carrier for payloads or as a sail surface.

## Revendications

1. Structure pliable, gonflable composée d'un grand nombre de tubes souples gonflables (11, 13) réunis en un squelette, les tubes (11, 13) étant reliés au moins partiellement de manière étanche au gaz au niveau des noeuds, de façon à permettre un échange de gaz à l'intérieur de ces noeuds, structure caractérisée en ce que les membranes (14) sont tendues sur le squelette entre les tubes (11, 13) et des organes de liaison (60) des tubes (11, 13 ; 61, 62, 63) des points formant les noeuds sont réalisés sous la forme de volets souples, liés, réalisés dans un matériau étanche au gaz et qui est mis en forme selon le flanc de découpage (70) correspondant au développement de l'organe de liaison (60) tridimensionnel et les arêtes sont reliées entre elles et avec les extrémités de tube (67) de manière étanche au gaz.

2. Structure pliable, gonflable selon la revendication 1, caractérisée en ce que les tubes souples (11, 13) et/ou les volets en matière synthétique des organes de liaison (60) sont réalisés en un matériau composite renforcé par des fibres.

3. Structure pliable, gonflable selon la revendication 1 ou 2, caractérisée en ce qu'au moins une partie des tubes souples (11, 13) présentent une courbure à l'état gonflé.

4. Structure pliable, gonflable selon la revendication 1, caractérisée en ce que des clapets ou de minces membranes (66) sont placés dans les tubes (11, 13, 61, 62, 63) et/ou les organes de liaison (60).

5. Structure pliable, gonflable selon l'une des revendications 1 à 4, caractérisée en ce que les membranes (14) tendues entre les tubes (11, 13) sont bloquées par un procédé de durcissement et participent ainsi à la stabilisation de la structure.

6. Structure pliable, gonflable selon la revendication 5, caractérisée en ce que sa forme à l'état gonflé résulte de la coopération des tubes (11, 13) et des membranes (14), les tubes (11, 13) s'alignant ou se courbant le long des points de fixation avec les membranes (14).

7. Application d'une structure pliable, gonflable selon l'une des revendications 1 à 6 pour réaliser des écrans de protection ou des chambres protectrices pour des charges utiles dans l'espace.

8. Application d'une structure pliable, gonflable selon l'une des revendications 1 à 6 comme support de charges utiles ou de surface de voilure.

FIG. 1a

FIG. 1b

FIG. 2a

FIG. 2b

8

FIG. 3

FIG. 4

FIG. 5

FIG. 6

FIG. 7